# EUROPEAN PATENT APPLICATION

(11) **EP 1 113 624 A1**
(43) Date of publication of application: **04.07.2001**
(21) Application number: 00927818.5
(22) Date of filing: 19.05.2000
(51) Int. Cl.: H04L 12/28

(54) **COMMUNICATION METHOD, COMMUNICATION DEVICE, AND COMMUNICATION SYSTEM**

(30) Priority: 19.05.1999 JP 13896199
(71) Applicant: Sony Corporation, Tokyo 141-0001 (JP)
(72) Inventor: Iijima, Yuko, Sony Corporation, Tokyo 141-0001 (JP)
(74) Representative: Ayers, Martyn Lewis Stanley
(86) International application number: JP0003231
(87) International publication number: WO0072519

(57) **Abstract**

When devices connected through a bus of IEEE1394 type or the like can be controlled by sending a predetermined command, in order to check whether the device corresponds with the desired control command, a parameter for sorting the command as being unique is added to an operation code of the control command to make an inquiry, thereby allowing whether the device corresponds or not to be confirmed from a response, and thus enabling a command corresponding to the device connected through the bus to easily be checked.

## Description

### TECHNICAL FIELD

The present invention relates to a communication method applicable to carrying out communications between devices connected with each other through e,g, an IEEE (The Institute of Electrical and Electronics Engineers) 1394 type bus line, and to a communication device and a communication system using this communication method.

### BACKGROUND ART

AV devices capable of mutually transmitting information through a network using an IEEE1394 type communication control bus has been developed. In this network, it is possible to control the AV devices connected to the network by transmitting a predetermined command (AV/C Command Transaction Set: hereinafter referred to as AV/C command,) .

For example, a receiver for receiving digital satellite broadcast and a recording device for recording video data are connected with each other through the above-mentioned bus. The video data received by the receiver is transmitted to the recording device and the recording operation by the recording device is controlled by a command from the receiver. This makes it possible to control reservation recording of video program and the like.

By the way, when a device connected to the IEEE1394 type bus does not correspond with the above-mentioned AV/C command, or even if the device corresponds with the AV/C command, when a version of software installed in the device or kind of the command makes the device not corresponding, the control by means of AV/C command not can be performed correctly in some cases.

Therefore, an AV device having a control function correspondent to the AV/C command is designed so that it maybe possible to check correspondency by inquiring, whether or not the device corresponds with a desired command of the device connected through the bus through a predetermined code ( such a code as called opcode, operand or the like) of the AV/C command. A command for inquiring using the opcode that is an operation code is called General Inquiry Command, and a command for inquiring using a combination of the opcode that is the operation code and an operand that is an operand code is called Specific Inquiry Command. Details of the AV/C command is described in AV/C Digital Interface Command Set General Specification which is open to public in 1394 Trade Association.

Incidentally, there maybe some cases where it is not possible to check correspondency correctly by this command for checking whether or not the device corresponds with. For example, the code called operand used in the above-mentioned Specific Inquiry Command mainly means subfunction, and according to regulations of the AV/C command there exists a command whose correspondency changes not only by combining the opcode with the operand that is the subfunction but also by adding further some parameter. Therefore, even if a response of [IMPLEMENTED] is returned from the device after the command for inquiring the correspondency is sent, when a command indicative of actual operation is sent, a response of "NOT IMPLEMENTED" indicating that there is no correspondence maybe returned depending on the kind of parameter for deciding contents of the command. Therefore, in case of the AV/C command, it is difficult to check what kind of command the connected device corresponds with.

### DISCLOSURE OF THE INVENTION

It is an object of the present invention to make it possible to satisfactorily check a command with which a device connected through an IEEE1394 type bus corresponds, when the device connected through the bus can be controlled by sending a predetermined command.

According to a first invention, there is provided a communication method for carrying out communication between a plurality of devices connected with each other through a predetermined digital communication control bus, wherein, in order to check whether a second device connected to a first device through the digital communication control bus corresponds with a desired control command, a parameter for sorting the control command as a unique one is added to an operation code of the control command sent from the first device. With this arrangement, the receiving side of the operation code of the control command can sort the command as being unique by the parameter added to the operation code, and can correctly answer whether or not the device corresponds with each function. Thus, it will be possible to correctly decide the function of the device connected through the bus, and to avoid malfunction such as sending a command to execute a non- correspondent function.

According to a second invention, in the communication method of the first invention, when the second device that receives the control command decides whether the device corresponds with the desired control command, the second device identifies not only by the operation code of the command but also by a parameter for sorting the command as a unique one, and the second device sends to the first device a response answering the inquiry about whether the device corresponds or not. With this arrangement, the device that receives the inquiry can correctly answer to the operation code based on the correspondency state of each device.

According to a third invention, in the communication method of the second invention, when it is decided whether the device corresponds with the desired control command based on the response received by the first device, display data of a control panel for instructing the second device to operate is generated based on the decision. With this arrangement, for example, when the first device makes the control panel for the second device display, it is possible to make the control panel appropriately display only feasible function by the second device.

According to a fourth invention, in the communication method of the third invention, the display data of the control panel is made to be such data that display of the corresponding control command and display of non-corresponding control command can be distinguished from each other. With this arrangement, it will be easy to distinguish the corresponding function from non-corresponding function based on the display of the control panel.

According to a fifth invention, there is provided a communication device capable of carrying out communications with an opposite party on the other end of connection connected with a predetermined digital communication control bus, comprising
communication means for transmitting and receiving packets through the digital communication control bus, and
control means, in order to check whether the opposite party in communication with the electronic device by means of the communication means corresponds with a desired control command, for adding a parameter for sorting the command as being unique to an operation code of the control command, and making the communication means send the resulting signal. With this arrangement, it will be possible to know the state of the opposite party in communication using the packets sent from the communication means not only by the operation code of the control command but also by a parameter for sorting the command as a unique one, and so to correctly decide the function of the other device connected through the bus.

According to a sixth invention, the communication device of the fifth invention further comprises display data generating means in which, when the communication means receives a response to the control command, the control means decides whether the device corresponds or not, and based on the decision, the display data generating means generates display data for a control panel that instructs a device sending the response what to operate. With this arrangement, for example, when the control panel of the opposite party device is made to display, it will be possible to make the control panel appropriately display only feasible function by the relevant device.

According to a seventh invention, in the communication device of the six invention, the display data for the control panel generated by the display data generating means is made to be such data that display of the corresponding control command and display of non-corresponding control command can be distinguished from each other. With this arrangement, it will be easy to distinguish the corresponding function from non-corresponding function based on the display of the control panel.

According to an eighth invention, there is provided a communication device capable of carrying out communications with an opposite party on the other end of connection connected with a predetermined digital communication control bus, comprising
communication means for transmitting and receiving packets through the digital communication control bus, and
control means for identifying whether the device is corresponds with a predetermined control command not only by designation of a predetermined operation code included in a packet received from the predetermined opposite party by the communication means but also by a parameter for sorting the command as being unique, and making the communication means transmit a packet of response including its response data. With this arrangement, it will be possible to correctly answer whether the device corresponds with each function by identifying whether the device is compatible with the control command not only by the operation code included in the packet received by the communication means but also by the parameter for sorting the command as being unique, and sending the response data from the communication means.

According to a ninth invention, there is provided a communication system for carrying out communication between first and second devices connected with each other through a predetermined digital communication control bus, wherein
the first device comprises:
   first communication means for transmitting and receiving packets through the digital communication control bus; and
   first control means for adding a parameter for sorting a desired control command as a unique one to an operation code of the control command in order to check whether the second device corresponds with the desired control command, and making the first communication means transmit the resulting signal;
the second device comprises:
   second communication means for transmitting and receiving packets through the digital communication control bus; and
   second control means for identifying whether the device corresponds with a predetermined control command not only by designation of a predetermined operation code included in packets received from the first device by the second communication means, but also by a parameter for sorting the command as a unique one, and making the second communication means send a packet of response including response data to the first device. With this arrangement, the receiving side of the operation code of the control command can sort the command as a unique one by the parameter added to the operation code, and can correctly answer whether the device corresponds with each function or not. It is thus possible to correctly decide the function of the device connected through the bus, and to avoid malfunction such as sending a command to execute a non-corresponding function.

According to a tenth invention, in the communication system of the ninth invention, the first device includes display data generating means, and when it is decided whether the device corresponds with the desired control command based on the response received by the first device, the display data generating means generates display data of a control panel for instructing the second device what to operate based on the decision,. With this arrangement, when the first device makes the control panel for the second device display, it will be possible to make the control panel appropriately display only feasible function by the second device.

According to an eleventh invention, in the communication system of the tenth invention, as the display data generated by the display data generating means of the first device is made to be such data that display for the corresponding control command and display for non-corresponding control command can be distinguished from each other. With this arrangement, it will be easy to distinguish the corresponding function from non-corresponding function based on the display of the control panel.

### BRIEF DESCRIPTION OF DRAWINGS

FIG. 1 is a block diagram for showing an example of the structure of an entire system according to an embodiment of the present invention.

FIG. 2 is a block diagram for showing an example of the structure of a digital satellite broadcasting receiver.

FIG. 3 is a block diagram for showing an example of the structure of an audio recording/reproducing device.

FIG. 4 is an explanatory view for showing an example of the structure of a frame defined in an IEEE1394 type.

FIG. 5 is an explanatory view for showing an example of the structure of address space of CRS architecture.

FIG. 6 is an explanatory view for showing an example of position, name and operation of an essential CRS.

FIG. 7 is an explanatory view for showing an example of the structure of a plug control register.

FIGS. 8 are explanatory views for showing examples of structures of Ompr, Opcr, Impr and iPCR.

FIG. 9 is an explanatory view for showing an example of the relation of a plug, a plug control resister and a transmitting channel.

FIG. 10 is an explanatory view for showing an example of the structure of data by a hierarchical structure of a descriptor.

FIG. 11 is an explanatory view for showing an example of the structure of data of the descriptor.

FIG. 12 is an explanatory view for showing an example of a generation ID shown in FIG. 11.

FIG. 13 is an explanatory view for showing an example of a list ID.

FIG. 14 is an explanatory view for showing an example of a stack model of an AV/C command.

FIG. 15 is an explanatory view for showing an example of the relation between a command of the AV/C command and a response.

FIG. 16 is an explanatory view for showing, in more detail, the example of the relation between the command of the AV/C command and the response.

FIG. 17 is an explanatory view for showing an example of the structure of data of the AV/C command.

FIG. 18 is an explanatory view for showing a concrete example of the AV/C command.

FIGS. 19 are explanatory views for showing a concrete example of the command of the AV/C command and the response.

FIG. 20 is an explanatory view for showing an example of an asynchronous connection common frame format.

FIG. 21 is an explanatory view for showing an example of a subfunction.

FIG. 22 is a flowchart showing a procedure of the command and the response at the time of connection.

FIG. 23 is a flowchart showing a procedure of the command and the response at the time of disconnection.

FIG. 24 is an explanatory view for showing an example of the structure of data for checking whether compatible/non-compatible with an allocate command according to the embodiment of the invention.

FIGS. 25 are explanatory views for showing an example of a display screen according to the embodiment of the invention, wherein A shows an example in which the device has recording function and B shows an example in which the device does not have recording function.

### BEST MODE FOR CARRYING OUT THE INVENTION

An embodiment of the present invention will be described below with reference to the accompanying drawings.

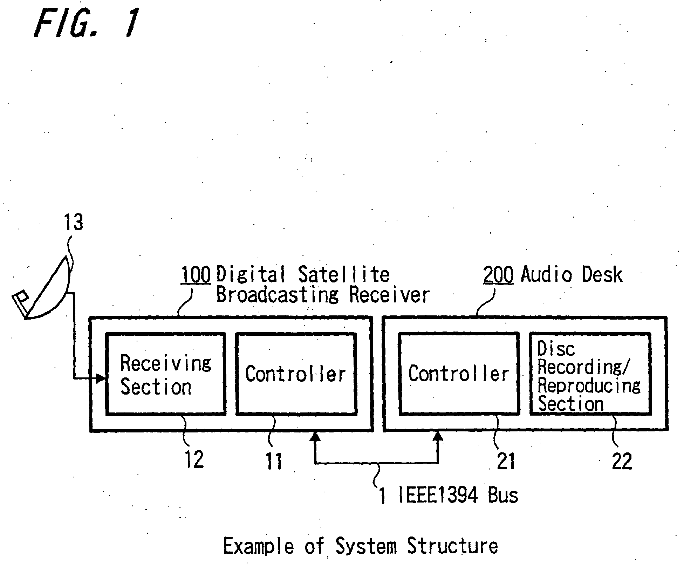

An example of the structure of a network system to which the present invention is applied will be described first with reference to FIG. 1. In this network system, a plurality of devices are connected to each other through an IEEE1394 type serial bus (hereinafter referred to simply as "bus") 1 that is a digital communication control bus. FIG. 1 shows an example in which two AV devices 100 and 200 are connected to each other through the bus 1. As devices connected to the bus 1 are herein prepared a digital satellite broadcast receiver (Integrated Receiver Decoder: IRD) 100 and an audio deck 200, each of which has a terminal to be connected to an IEEE1394 type bus. The audio deck 200 uses a magneto-optical disc or an optical disc called MD (Mini Disc) to record and reproduce audio data.

Incidentally, each of the devices 100 and 200 connected to the bus 1 is called a unit. Each of the units can read and write information stored or to be stored in each unit using a command and a response prescribed in AV/C command. The function each unit has is called a subunit.

Each the unit connected to the bus 1 is also called node for which a node ID is set. A sender and a destination of data on the bus 1 is specified by the node ID.

A parabola antenna 13 is connected to the digital satellite broadcasting receiver 100 for receiving and decoding the digital satellite broadcast or the like. A reception processing section 12 connected to the parabola antenna 13 receives and decodes a signal of a predetermined channel. In this case, a controller 11 built in the digital satellite broadcast receiver 100 controls receiving operation such as reception and decoding.

Examples of channels that can be received by the digital satellite broadcasting receiver 100 are a video channel (a so-called ordinary television broadcast channel) from which video data and audio data incidental on the video data can be obtained, audio channel from which only audio data such as music can be obtained, data channel from which various data such as data for reading Internet Web and so on. Examples of audio data transmitted by the audio channel are audio data modulated by a common method such as MPEG method, and further audio data compressed and encoded with high efficiency by ATRAC (Adaptive Transform Acoustic Coding) method or the like.

Although it is not illustrated in FIG. 1, an image receiver is connected to the digital satellite broadcasting receiver 100. When a video channel is received, video data of the video channel can be supplied to the image receiver to display the video data. When the digital satellite broadcasting receiver 100 controls operation of the device connected to the bus 1, (here, the audio deck 200) it is possible to display an operation screen (a so-called GUI screen) of the deck 200 on a screen of the image receiver under the control of the receiver 100, thereby enabling instructions about operation of the deck 200 to be begin by operating a cursor key based on the display on the screen. An example of operation using this GUI screen will be described below.

By transmitting data between the receiver 100 and the deck 200 through the bus 1, for example, such a record processing is enabled that the audio data of the audio channel received by the digital satellite broadcast receiver 100 is transmitted to the audio deck 200 through the bus 1, and the audio data is recorded on the disk by the audio deck 200. In this case, the digital satellite broadcasting receiver 100 can control the recording operation of the audio deck 200 by transmitting the above mentioned AV/C command through the bus 1.

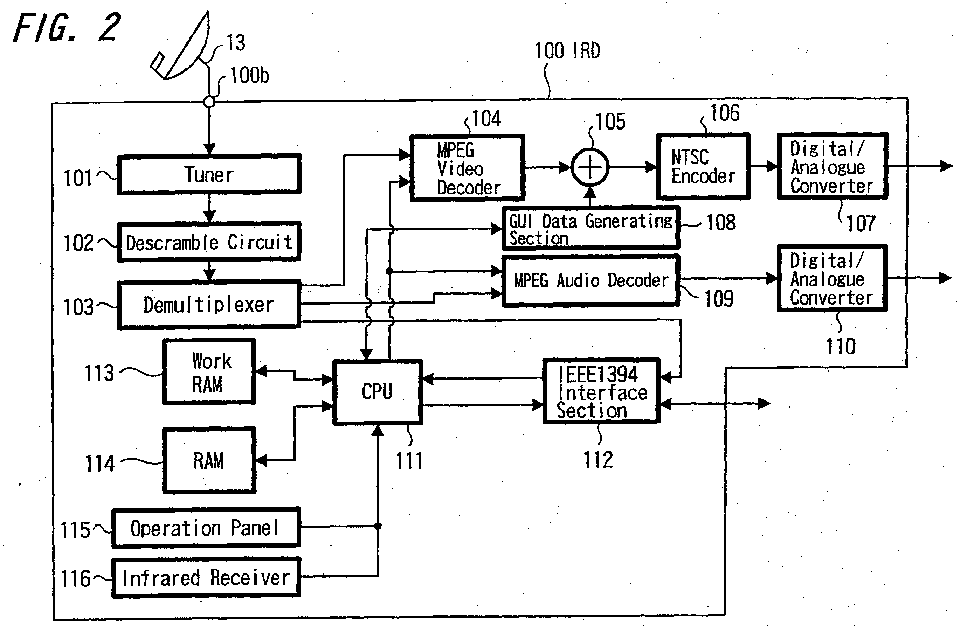

FIG. 2 shows a specific example of the structure of a digital satellite broadcasting receiver 100. Electric wave broadcast from the satellite is received by an antenna 13 and inputted to a terminal 100a, and is supplied to a tuner 101 as a program selecting means provided in the digital satellite broadcasting receiver 100. The digital satellite broadcast receiver 100 has circuits operated under the control of a central processing unit (CPU) 111 and obtains a signal of predetermined channel by the tuner 101. The received signal obtained by the tuner 101 is supplied to a descrambler circuit 102.

The descrambler circuit 102 extracts only multiplexed data of a contracted channel (or non-ciphered channel) among received data and supplies the same to a demultiplexer 103 based on cipher key information of the contracted channel that is stored in an IC card (not shown) inserted into a body of the digital satellite broadcasting receiver 100.

The demultiplexer 103 rearranges the supplied multiplexed data channel by channel, extracts only a channel specified by a user, sends a video stream comprising a packet of image portion to an MPEG video decoder 104, and sends an overlap stream comprising a packet of sound portion to an MPEG audio decoder 109.

The MPEG video decoder 104 restores image data before being compressed and encoded by decoding the video stream, and sends this to an NTSC encoder 106 through an adder 105. The NTSC encoder 106 converts the image data into a luminance signal and a color-difference signal of NTSC type, and sends them to a digital/analogue converter 107 as NTSC type video data. The digital/analogue converter 107 converts the NTSC data into an analogue video signal which is supplied to a connected image receiver (not shown).

Moreover the digital satellite broadcasting receiver 100 of the present embodiment includes a GUI data generating section 108 for generating image data for various display for a graphical user interface (GUI) based on the control of the CPU 111. The image data (display data) for the GUI generated by the GUI data generating section 108 is supplied to the adder 105, and superposed on the image data outputted by the MPEG video decoder 104 so that a GUI image maybe superposed on the received broadcast image.

The MPEG audio decoder 109 restores the PCM audio data before it is compressed and encoded by decoding audio stream, and sends the data to a digital/analogue converter 110.

The digital/analogue converter 110 generates an LCh audio signal and an RCh audio signal by converting the PCM audio data into analogue signal, and outputs this as sound through speakers (not shown) of a connected audio reproducing system.

The digital satellite broadcast receiver 100 of the present embodiment supplies the video stream and the audio stream extracted by the demultiplexer 103 to an IEEE1394 interface section 112, and can send them to an IEEE1394 type bus line 1 connected to an interface section 112. The received video stream and audio stream are sent out in an isochronous transmission mode. When the GUI data generating section 108 generates the GUI image data, the image data is supplied to the interface section 112 through the CPU 111, and the GUI image data can be sent to the bus line 1 from the interface section 112.

A work RAM 113 and a RAM 114 are connected to the CPU 111, and control processing is carried out using these memories. Operation commands from an operation panel 115 and remote control signals from an infrared receiver 116 are supplied to the CPU 111, and operation can be carried out based on the various operations. The CPU 111 can decide a command and a response sent to the interface section 112 from the bus line 1. The CPU 111 corresponds to a controller 11 in the digital satellite broadcast receiver 100 shown in FIG. 1.

The audio deck 200 is a disc recording and reproducing device capable of recording audio data and data coming with the audio data as digital data onto a magneto-optical disc of a format called Mini Disc (MD), and capable of reproducing the data. A controller 21 of the audio deck 200 responds to operation of recording or reproducing instructions, operation of reservation recording and the like from a user to control the entire deck operation. A disk recording/reproducing section 22 records, onto the magneto-optical disc audio data and the like inputted from the bus 1 or other input section. In this case, the data is stored into the disc as the data compressed and encoded by the ATRAC method. Therefore, when the audio data transmitted through the bus 1 is the ATRAC data, the transmitted audio data is stored into the disc as it is.

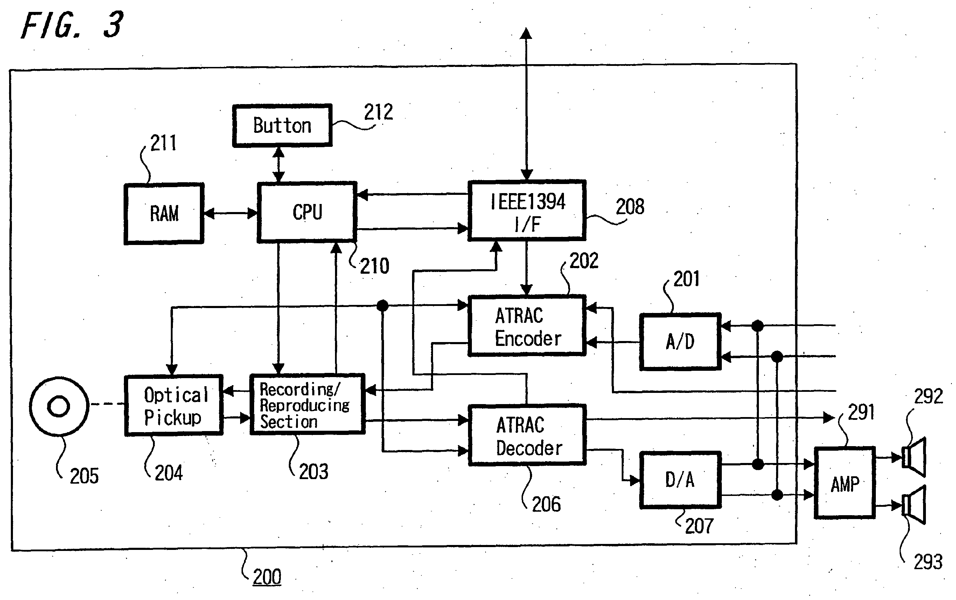

FIG. 3 is a block diagram showing an example of the structure of the audio deck 200. The audio deck 200 that is an audio recording and reproducing device uses a magneto-optical disc or an optical disc contained in a resin package called MD (mini disc), and records and reproduce a sound signal as digital data.

The structure of a recording system as as follows. Sound signal of two analogue channels inputted from the outside is converted into digital sound data by an analogue/digital converter 201. The converted digital sound data is supplied to an ATRAC encoder 202 and encoded into sound data compressed by the ATRAC method. When digital sound data is directly inputted from the outside, the input sound data is supplied to the ATRAC encoder 202 without passing through the analogue/digital converter 201. Data encoded by the encoder 202 is supplied to a recording/reproducing section 203 for record processing. An optical pickup 204 is driven based on the processed data to record the data on a disc (magneto-optical disk) 205. When it is recorded, magnetic field modulation is performed by a magnetic head (not shown).

The structure of a reproducing system is as follows. Data recorded on the disc (magneto-optical disk or optical disk) 205 is read out by the optical pickup 204, and processed for reproduction by the recording/reproducing section 203, to obtain sound data compressed by the ATRAC method. This reproduced sound data is supplied to an ATRC decoder 206, which decodes into digital sound data of a predetermined type. The decoded sound data is supplied to a digital/analogue converter 207 which converts into two channel analogue sound signals for outputting. When the digital sound data is directly outputted to the outside, the sound data decoded by the ATRC decoder 206 is directly outputted without passing through the digital/analogue converter 207. In the example shown in FIG. 3, the output sound signal analogue-converted is supplied to an amplifier 291 which processes for sound output processing such as amplification, and two channel sound (audio) is outputted from connected speakers 292 and 293.

The audio deck 200 includes an interface section 208 for connecting the audio deck 200 to the IEEE1394 type bus. Sound data obtained into the interface section 208 from the IEEE1394 type bus is supplied to the recording/reproducing section 203 through the ATRAC encoder 202, thus allowing the data to be recorded in the disc 205. The sound data reproduced from the disc 205 is supplied from the recording/reproducing section 203 to the interface section 208 through the ATRC decoder 206, and sent out toward the IEEE1394 type bus.

Recording and reproduction processing in the audio deck 200 and transmission processing through the interface section 208 are carried out by control of a central processing unit (CPU) 210. A memory 211 that is a work RAM is connected to the CPU 210. Operation information from an operation panel 212 is supplied to the CPU 210 so that operation control in accordance with the operation information can be carried out. Further, when the interface section 208 receives control data such as an AV/C command to be described below through the IEEE1394 type bus, the data is supplied to the CPU 210 so that the CPU 210 can carry out corresponding operation control.

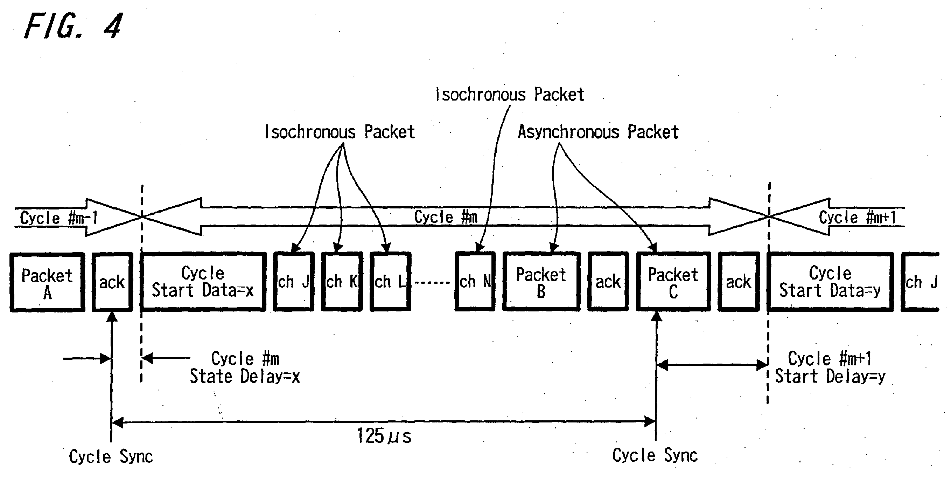

Next, a data transmission state by the IEEE1394 type bus line 1 to which the devices 100 and 200 are connected. FIG. 4 is a diagram for showing a cycle structure of the data transmission of the devices connected through IEEE 1394. In the IEEE1394, data is divided into packets and transmitted on the time division basis in a cycle of length of 125µS as a reference. This cycle is created by a cycle start signal supplied from a node (any one of devices connected to the bus) having a cycle master function. An isochronous packet secures a band (this is temporal unit, but called band) which is necessary for transmission from heads of all cycles. Therefore, in the isochronous transmission, transmission of data within a fixed time is ensured. However, acknowledgment (ack) from the receiving side is not made. When a transmission error is generated, there is no way to protect, and the data is lost. A node securing the bus during a time period not used for isochronous transmission of each cycle, as a result of arbitration, sends out the asynchronous packets. In the asynchronous transmission, reliable transmission is ensured by using acknowledgment and retry, but transmission timing is not fixed.

In order to make a predetermined node perform the isochronous transmission, the node must correspond with the isochronous function. Further, at least one of the nodes corresponding with the isochronous function must have the cycle master function. Moreover, at least one of the nodes connected to the IEEE1394 serial bus must have an isochronous resource manager function.

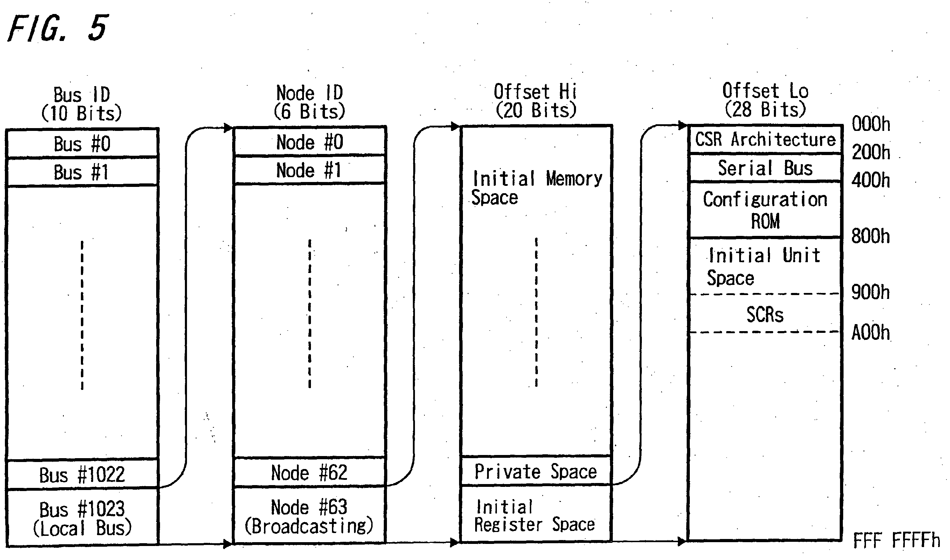

The IEEE1394 conforms to CSR (Control & Status Register) architecture having 64 bit address space prescribed in ISO/ IEC13213. FIG. 5 is a diagram for explaining the structure of the address space of the CSR architecture. Higher order 16 bits form node ID indicative of each node on IEEE1394, and remaining 48 bits are used for specifying the address space given to each node. The higher order 16 bits are divided into 10 bits of bus ID and 6 bits of physical ID (node ID in a narrow sense). Since a value in which all bits are 1 is used for special purpose, it is possible to specify 1023 buses and 63 nodes. The node ID is reset at the time of bus reset. The bus reset is generated when the structure of a device connected to the bus 1 changes. For example, when it is recognized that any one of devices connected to the bus 1 is disconnected or a new device is connected to the bus 1, the bus is reset.

Space defined by the higher order.20 bits of the address space of 256 terabytes defined by lower order 48 bits are divided into initial register space used for register that is unique to 2048 bits of CSR, register that is unique to IEEE1394, etc. private space, initial memory space and the like. Space defined by the lower order 28 bits is used as configuration read only memory, initial unit space used for node only, plug control registers (PCRs), etc. if the space defined by higher order 20 bits is the initial register space.

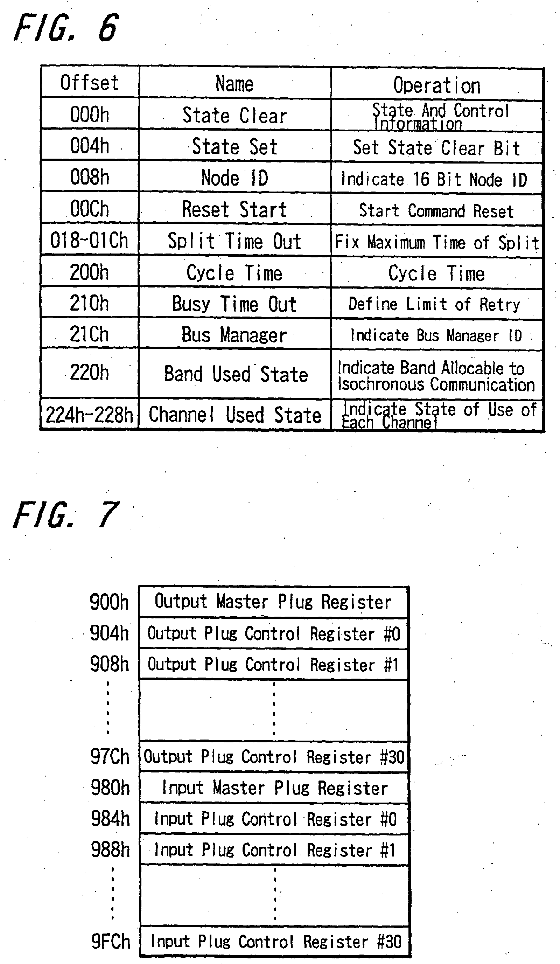

FIG. 6 is an explanatory diagram for showing offset address, name and operation of a main CRS. The offset in FIG. 6 means offset addresses from FFFFF0000000h (number having h at its end thereof means hexadecimal digit) address from which the initial register space starts. A bandwidth available register having offset 220h indicates a band that can be allocated to isochronous communication, and only a value of a node operating as an isochronous resource manager is effective. The CSR in FIG. 5 is possessed by each node, but only the bandwidth available register of the isochronous resource manager is made effective. In other words, only the isochronous resource manager substantially has the bandwidth available register. The maximum value is kept in the bandwidth available register when a band is not allocated to the isochronous communication, and whenever the band is allocated, its value is reduced.

The bits of the channel available registers of the offsets 224h to 228h correspond to 0 to 63 channel numbers respectively, and when the bit is 0, this means that this channel has already been allocated. Only a channel available register of a node that is operating as the isochronous resource manager is effective.

Referring back to FIG. 5, a configuration ROM based on general ROM (read only memory) format is arranged in the addresses 200h to 400h in the initial register space. A bus info block, a route directory and a unit directory are arranged in the configuration ROM. An ID number indicative of a manufacturer of the device is stored in a company ID within the bus info block. An ID that is unique to that device, different from other devices and the only one in the world is stored in a chip ID.

In order to control input and output operations of the device through the interface, the node is provided in the addresses 900h to 9FFh in the initial unit space shown in FIG. 5 a PCR (Plug Control Register) prescribed in IEC1883. This is obtained by materializing the concept of a plug so as to form a signal path similar to an analogue interface theoretically. FIG. 7 is a diagram for explaining a structure of the PCR. The PCR includes an oPCR (output Plug Control Register) representative of an output plug, and an iPCR (input Plug Control Register) representative of an output plug. Further, the PCR includes an oMPR (output Master Plug Register) and an iMPR (input Master Plug Register) indicative of information of the output plug and the input plug that are inherent to each device, respectively. Each device does not have more than one oMPRs and iMPRs respectively, but the device can have more than one oPCRs and iPCRs corresponding to each plug depending upon capability of the device. The PCR shown in FIG. 7 has 31 oPCRs and 31 iPCRs. Flow of the isochronous data is controlled by operating registers corresponding to these plugs.

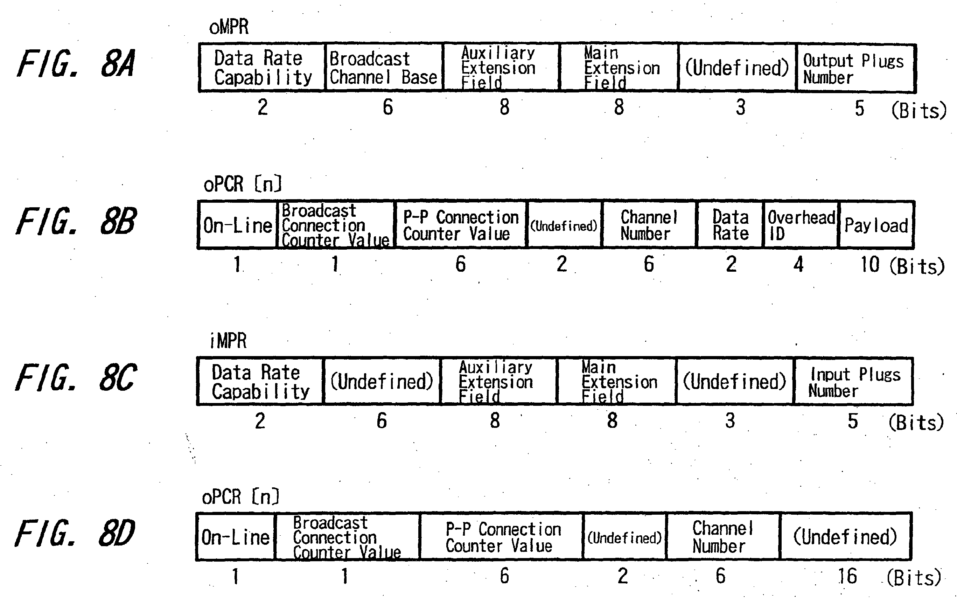

FIGS. 8 are diagrams showing structures of the oMPR, oPCR, iMPR and iPCR. FIG. 8A shows the structure of the oMPR; FIG. 8B shows the structure of the oPCR; FIG. 8C shows the structure of the iMPR; and FIG. 8D shows the structure of the iPCR. A code indicative of the maximum transmission speed of isochronous data that can be sent or received by the device is stored in data rate capability of two bits on the MSB side of the oMPR and the iMPR. Broadcast channel base of the oMPR defines a channel number used for broadcast output.

In the number of output plugs of 5 bits on the LSB side of the oMPR, a value indicative of the number of output plugs possessed by the device, i.e., of the number of oPCRs is stored. In the number of input plugs of 5 bits on the LSB side of the iMPR, a value indicative of the number of input plugs possessed by the device, i.e., of the number of iPCRs is stored. A main extension field and an auxiliary extension field are fields defined for future extension.

On-line on the MSB of each of the oPCR and iPCR indicates that use state of the plug. To be specific, if the value is 1, the plug is on-line, and if the value is 0, the plug is off-line. A value of a broadcasting connection counter of each of the oPCR and iPCR indicates that there is broadcast connection (1) or there is no broadcast connection (0). A value of a point-to-point connection counter having 6-bit width of the oPCR and iPCR indicates the number of point-to-point connections possessed by the plug. The point-to-point connection (so-called p-p connection) is a connection for transmitting data only between one specific node and another specific node.

A value of channel number having 6-bit width of the oPCR and iPCR indicates isochronous channel number to which the plug is connected. A value of data rate having 2-bit width of the oPCR indicates an actual transmission speed of packets of isochronous data outputted from the plug. A code stored in an overhead ID having 4 bit width of the oPCR indicates a bandwidth of the isochronous communication. A value of payload having 10-bit width of the oPCR indicates the maximum value of data included in an isochronous packet that the plug can handle.

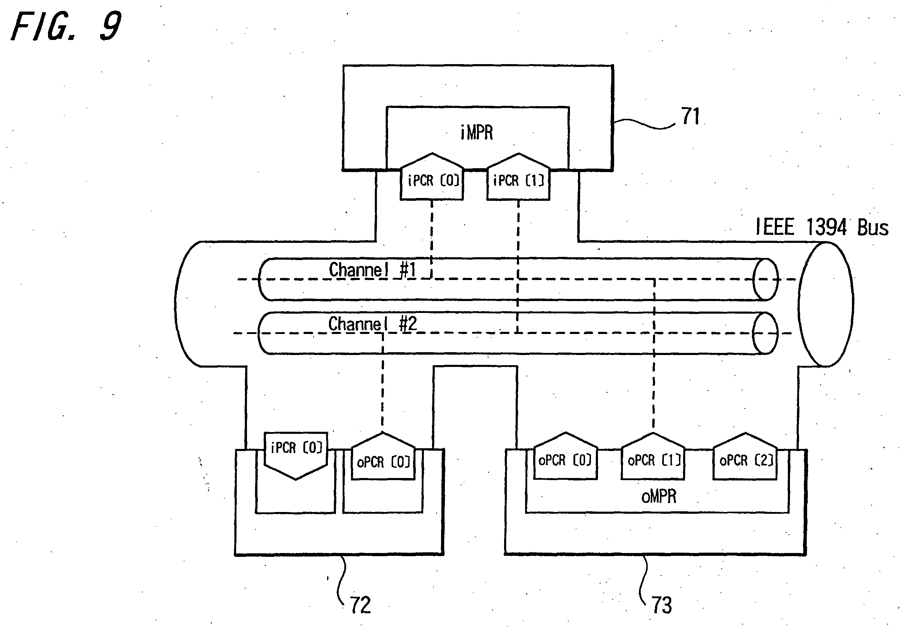

FIG. 9 shows the relation among the plug, the plug control register and the isochronous channel. In this figure, devices connected to the IEEE1394 type bus are denoted as AV-devices 71 to 73. Of oPCR [0] to oPCR [2] whose transmission speed and the number of oPCR are determined by oMPR of the AV-device 73, isochronous data whose channel is specified by the oPCR [1] is sent out to a channel #1 of the IEEE1394 serial bus. The AV-device 71 read isochronous data sent to the channel #1 of the IEEE1394 serial bus by the transmission speed and the iPCR [0]. Similarly, the AV-device 72 sends isochronous data to the channel #2 specified by the oPCR [0], and the AV-device 71 reads the isochronous data from the channel #2 specified by the iPRC [1].

Data is transmitted between the devices connected to the IEEE1394 serial bus in this manner. The system of the present embodiment is arranged so as to make it possible to decide the control and state of each device by utilizing the AV/C command set prescribed as a command for controlling the device connected through the IEEE1394 serial bus. Next, this AV/C command set will be described.

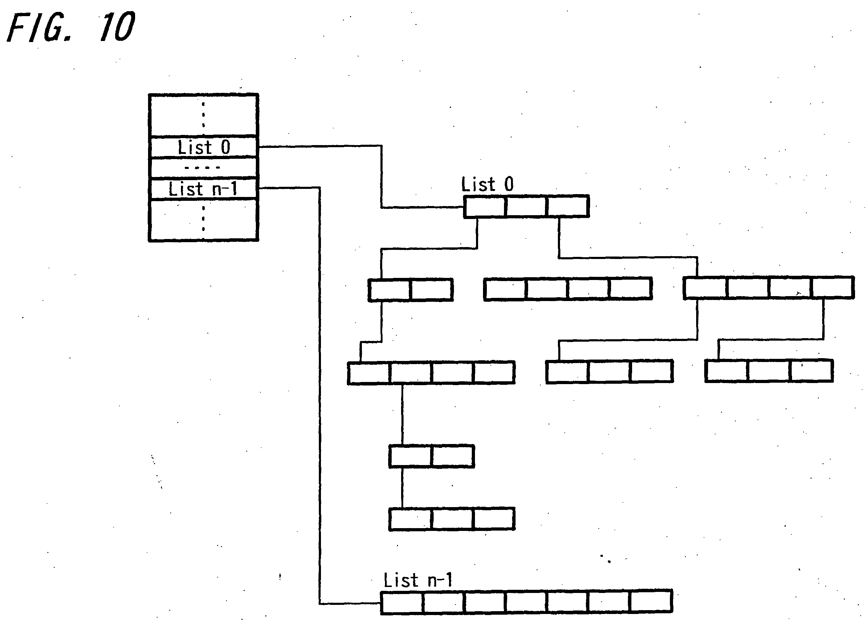

First of all, the data structure of a subunit identifier descriptor in the AV/C command used in the system of the present embodiment will be described with reference to FIG. 10 to FIG. 13. FIG. 10 shows the data structure of the subunit identifier descriptor. As shown in FIG. 10, it is formed of lists of the subunit identifier descriptor having hierarchical structure. The list represents channels that can receive signals if it is a tuner, or represents a tune, etc. stored in a disc if it is a disc. A list in the highest layer of the hierarchical structure is called root list, and for example, a list 0 is a root list to the lower list. Other lists are also root lists. There exist as many root lists as there are objects. The object means e,g, each channel in digital broadcast when the AV-device connected to the bus is a tuner. All the lists in one layer share common information.

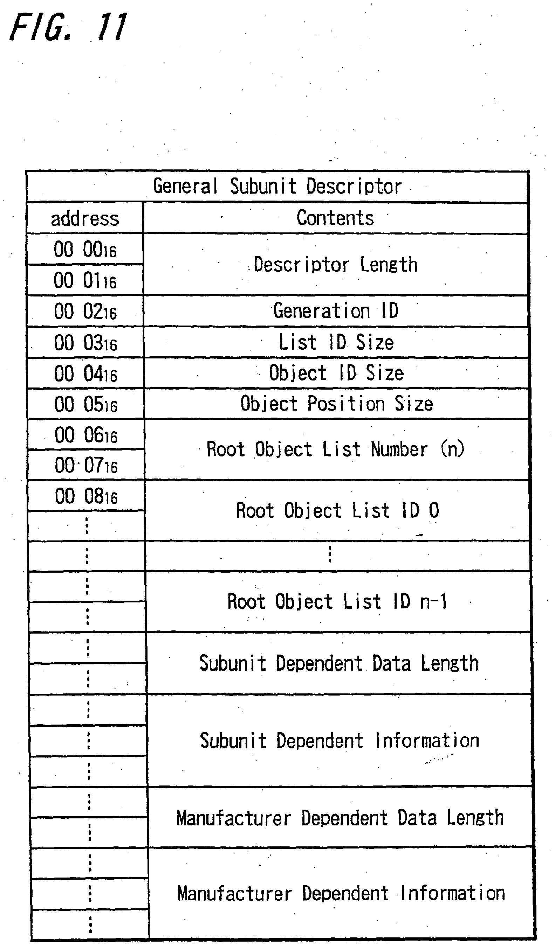

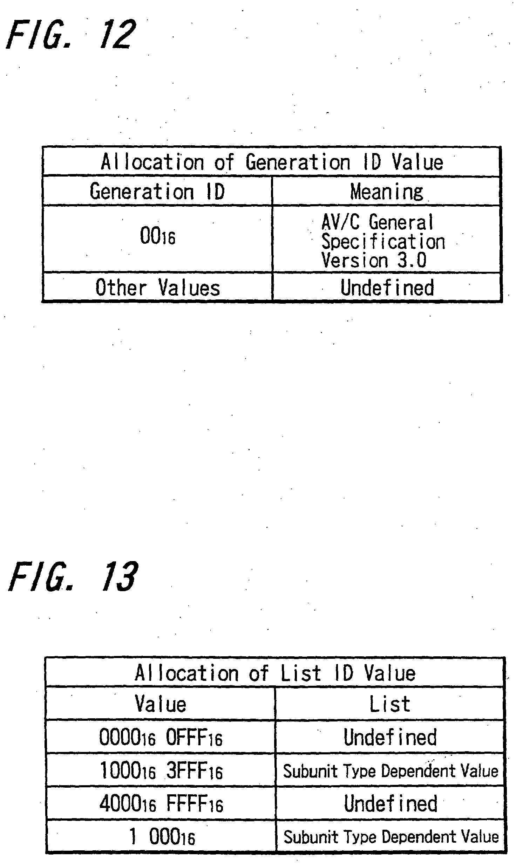

FIG. 11 shows a format of the general subunit identifier descriptor. Attribute information on function is described in the subunit descriptor. A descriptor length field does not have a value of the field itself. A generation ID shows a version of the AV/C command set, and its value is e,g, "00h" (h shows hexadecimal digit). in this connection, as shown in FIG. 12 for example, "00h" means that the data structure and the command are version 3.0 of AV/C command general specification. Further, as shown in FIG. 12, all values except "00h" are reserved and secured for future specification.

A size of list ID shows the number of bytes of the list ID. A size of object ID shows the number of bytes of the objects ID. A size of object position shows a position (the number of bytes) in the list used when it is referred at the time of control. The number of root object lists shows the number of root object lists. A root object list ID shows ID for identifying the highest root object list in the independent layer.

A subunit dependent length shows the number of bytes of subsequent subunit dependent information (data) fields. The subunit dependent data field is a field showing information that is inherent to function. A manufacturer dependent length shows the number of bytes of subsequent manufacturer dependent information (data) fields. The manufacturer dependent data field is a field showing specification information of a vendor (manufacturer). When there is no manufacturer dependent data in the descriptor, this field does not exist.

FIG. 13 shows allocation ranges of the list ID shown in FIG. 11. As shown in FIG. 13, "0000h to 0FFFh" and "4000h to FFFFh" are reserved and secured as allocation ranges for future specification. Further, "1000h to 3FFFh" and "10000h to the maximum value of list ID" are prepared for identifying attribute information of function type dependent information.

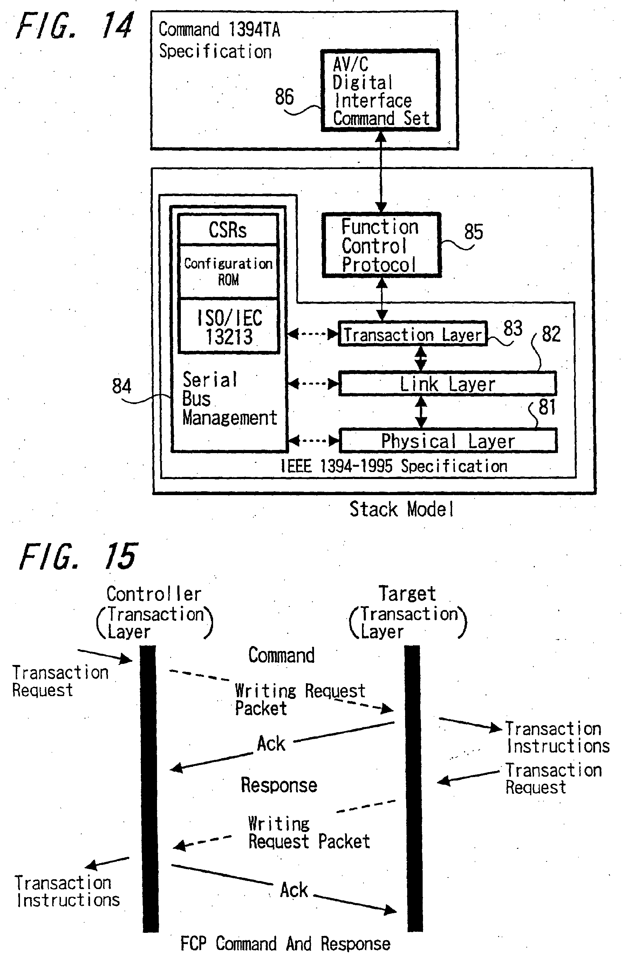

Next, the AV/C command set used in the system of the present embodiment will be described with reference to FIGS. 14 to 19. FIG. 14 shows a stack model of the AV/C command set. As shown in FIG. 14, a physical layer 81, a link layer 82, a transaction layer 83 and a serial bus management 84 conform to the IEEE1394. A FCP (Function Control Protocol) 85 conforms to IEC61883. An AV/C command set 86 conforms to 1394TA spec.

FIG. 15 is a diagram for explaining command and response of the FCP 85 in FIG. 14. The FCP is a protocol for controlling a device (node) on the IEEE1394 type bus. As shown in FIG. 15, a controller controls, and a target is controlled. The command or response of the FCP is transmitted between the nodes using write transaction of asynchronous communication of the IEEE1394. The target that receives the data sends acknowledgment to the controller for confirming the reception of the data.

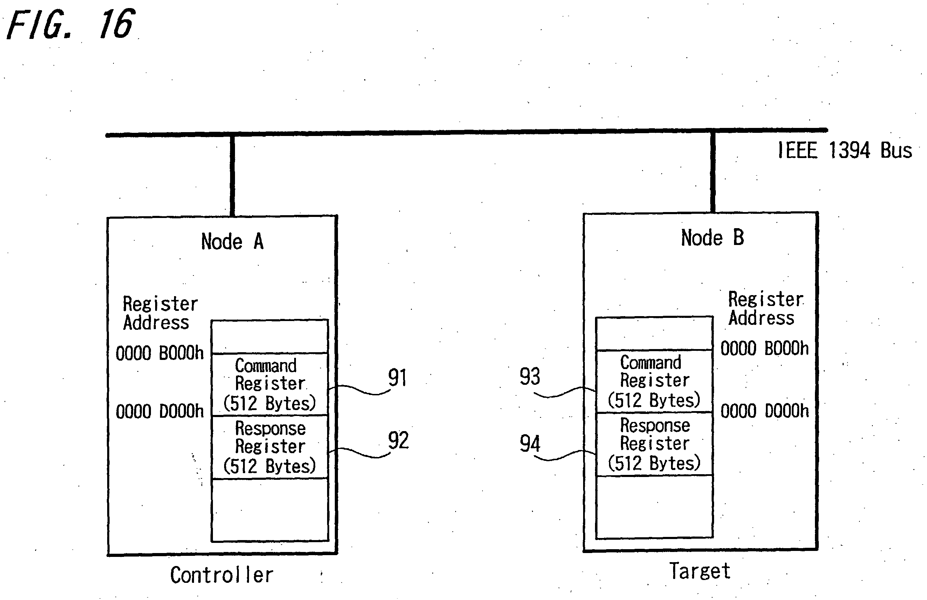

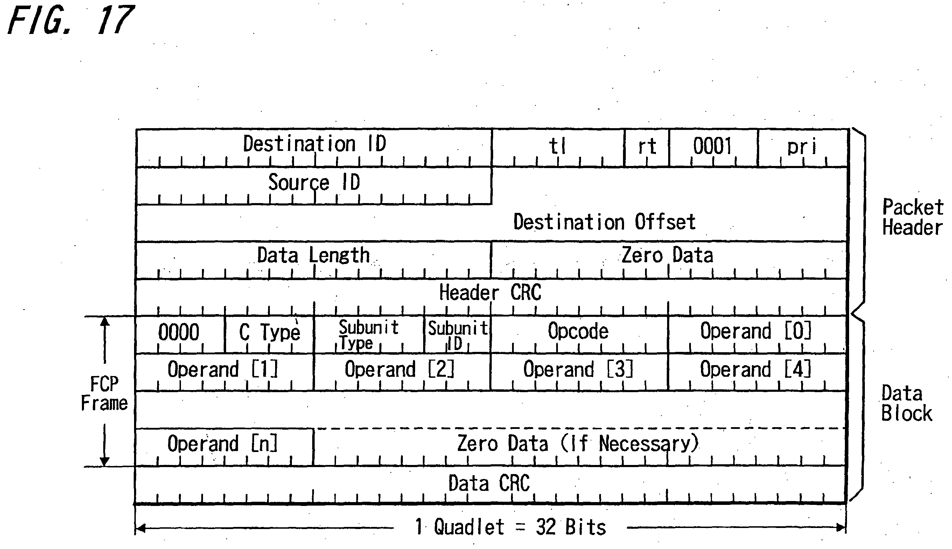

FIG. 16 is an explanatory diagram for explaining, in more detail the relation between the command and response of the FCP shown in FIG. 15. A node A and a node B are connected to each other through the IEEE1394 bus. The node A is the controller and the node B is the target. Both of the nodes A and B are each provided with 512 bytes of a command register and a response register. As shown in FIG. 16, the controller transmit a command to a command register 93 of the target by writing a command message. Reversely, the target transmits a response to a response register 92 of the controller by writing a response message. Control information is exchanged for the two above messages. The kind of command set sent on the FCP is described in CTS in a data field shown in FIG. 17 which will be described below.

FIG. 17 shows the data structure of a packet transmitted in the asynchronous transmission mode of the AV/C command. The AV/C command set is a command set for controlling the AV-device, and CTS (ID of the command set)="0000". An AV/C command frame and a response frame are exchanged between the nodes using the FCP. The response to the command is carried out within 100 ms so as not to apply load to the bus and the AV-device. As shown in FIG. 17, data of the asynchronous packet is constituted by horizontal 32 bits (=1 quadlet). In the figure, an upper portion shows a packet header and a lower portion shows data blocks. A destination ID shows an address.

The CTS indicates ID of the command set, and in AV/C command set CTS="0000". A field of a c type/response indicates function classification of a command when the packet is a command, and when the packet is a response, it indicates a result of processing the command. The command is roughly divided into four types. They are defined as (1) command for controlling function from the outside (CONTROL), (2) command for inquiring state from the outside (STATUS), (3) command for inquiring presence or absence of support from the outside (GENERAL INQUIRY (presence or absence of support of opcode) and SPECIFIC INQUIRY (presence or absence of support of opcode and operands)), and (4) command for requesting to inform change of state to the outside (NOTIFY).

The response is returned in accordance with the type of command. The response to CONTROL command includes "NOT IMPLEMENTED", "ACCEPTED", "REJECTED" and "INTERIM". The response to STATUS command includes "NOT IMPLEMENTED", "REJECTED", "IN TRANSITION" and "STABLE". The response to GENERAL INQUIRY and SPECIFIC INQUIRY command for inquiring presence or absence of support of command from the outside includes "IMPLEMENTED" and "NOT IMPLEMENTED". The response to NOTIFY command for requesting to inform the change of state to the outside includes "NOT IMPLEMENTED", "REJECTED", "INTERIM" and "CHANGED".

A subunit type is provided for specifying a function in the device, to which a tape recorder/player, a tuner and the like are allocated. In addition to function corresponding with the device, a BBS (Bulletin board subunit) that is a subunit for opening information to other device is also allocated to the subunit type. In order to decide when a plurality of subunits of the same type exist, addressing is carried out using subunit ID as decision number. An opcode that is a code of operation represents a command, and an operand represents a parameter of the command. A field that is added if necessary (additional operands) is also prepared. Subsequent to the operand, 0 data, etc. are is added at need. A data CRC (Cyclic Reduncy Check) is used for checking error in data transmission.

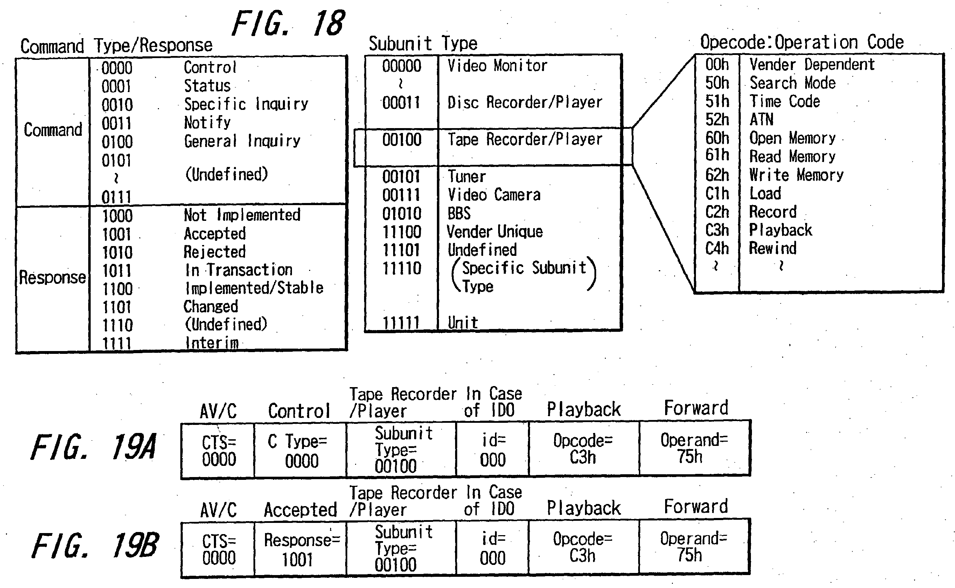

FIG. 18 shows specific examples of the AV/C command. The left side of FIG. 18 shows specific examples of command type/response. The upper step in the figure shows commands and the lower step shows responses. "CONTROL" is allocated to "0000"; "STATUS" is allocated to "0001"; "SPECIFIC INQUIRY" is allocated to "0010"; "NOTIFY" is allocated to "0011"; and "GENERAL INQUIRY" is allocated to "0100". "0101 to 0111" are reserved and secured for future specification. "NOT IMPLEMENTED" is allocated to "1000"; "ACCEPTED" is allocated to "1001"; "REJECTED" is allocated to "1010"; "IN TRANSITION" is allocated to "1011"; "IMPLEMENTED/STABLE" is allocated to "1100"; "CHANGED" is allocated to "1101"; and "INTERIM" is allocated to "1111". "1110" is reserved and secured for future specification.

The center of FIG. 18 shows specific examples of the subunit type. A video monitor is allocated to "00000"; a tape recorder/player is allocated to "00100"; a tuner is allocated to "100101"; a video camera is allocated to "00111"; a subunit used as a billboard called BBS (Bulletin board subunit) is allocated to "01010"; a vender unique subunit type (vender unique) is allocated to "11100"; a subunit type extended to next byte is allocated to "11110". A unit is allocated to "11111", but this is used when it is sent to a device itself. An example thereof is "on and off" of a power supply.

The right side of FIG. 18 shows specific examples of opcodes (operation code). A table of the opcodes exists in each subunit type, and FIG. 18 shows opcodes when the subunit type is a tape recorder/player. Operands are defined in each opcode. In this example, vender dependent value is allocated to "00h"; a search mode is allocated to "50h"; time code is allocated to "51h"; an ATN is allocated to "52h"; open memory is allocated to "60h"; read memory is allocated to "61h"; write memory is allocated to "62h"; load is allocated to "C1h"; recording is allocated to "C2h"; playback is allocated to "C3h"; and rewind is allocated to "C4h".

FIGS. 19 show specific examples of the AV/C command and response. For example, when instructing a playback device as a target (consumer) to playback, the controller sends a command as shown in FIG. 19A to the target. Since this command uses the AV/C command set, CTS="0000". Since a CONTROL command for controlling a device from the outside is used, ctype(command type)="0000" (see FIG. 18). A subunit type is a tape recorder/ player, and so subunit type="00100" (see FIG. 18). An id shows a case of ID0, and so id=000. The opcode is "C3h" meaning playback (see FIG. 18). The operand is "75h" meaning forward. On playback, the target returns a response as shown in FIG. 19B to the controller. In this example, since "accepted" enters the response, response="1001" (see FIG. 18). Except the response, others are the same as those shown in FIG. 19A, description thereof is omitted.

Next, a processing for checking function of other device from one device connected to the bus 1 in the structure of the present embodiment will be described. This processing is based on the AV/C command, and by way of example, a processing for checking function of the audio deck 200 from the digital satellite broadcast receiver 100 will be described.

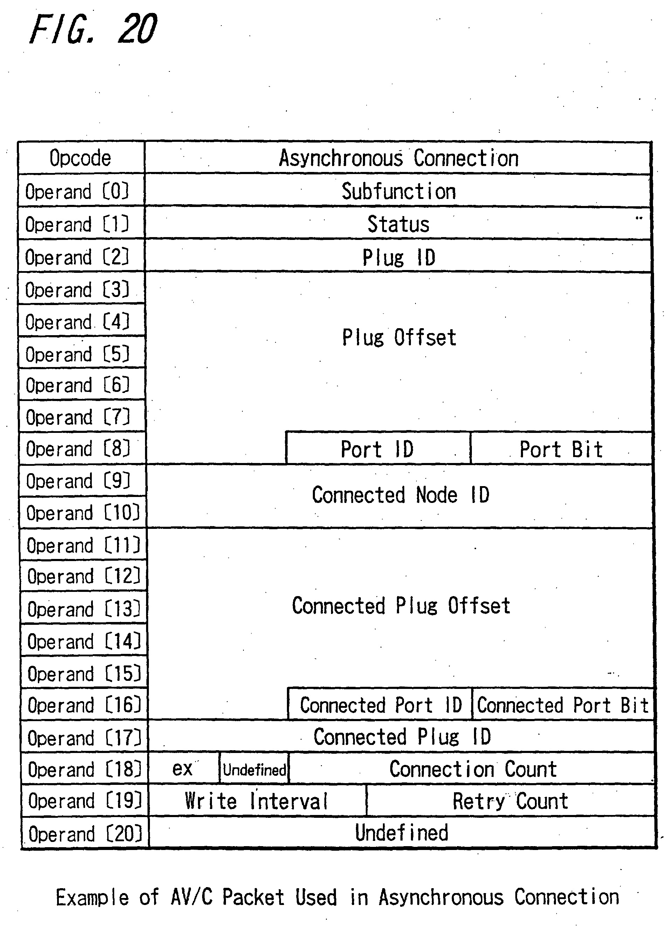

In the asynchronous connection that is a connection used for transmitting data of a still image, etc. in the asynchronous transmission mode by the bus 1, sections of the opcode and the operand in the packet shown in FIG. 17 are made to have formats shown in FIG. 20. First, in the section of the opcode that is the operation code, a code meaning asynchronous connection is arranged.

In the section of operand [0], a subfunction is indicated. This subfunction is data for specifying a function at the time of control command. Details of the subfunction will be described below.

In the section of operand [1], status is indicated. This status indicates the state of a port at the time of response of ACCEPTED and STABLE. At the time of response of REJECTED, it indicates an error code.

In the section of operand [2], a plug ID is indicated. This plug ID indicates a unit flag forming an object of a command.

A plug offset is indicated in the sections of operand [3] to [7] and a part of the section of operand [8]. In a response, this plug offset indicates an offset address value for asynchronous transmission mode.

In remaining part of the section of operand[8], a port ID and a port bit are indicated. The port ID indicates a port forming an object of a command. The port bit indicates a function supported by the port in a response.

In the sections of operands [9] and [10], a connected node ID is indicated. This connected node ID indicates a node ID of a connected device.

In the sections of operands [11] to [15] and a part of the section of operand [16], a connected plug offset is indicated. This connected plug offset indicates an offset address value of a connected plug.

In remaining part of the section of the operand [16], connected port ID and connected port bit are indicated. The connected port ID indicates a connected port. The connected port bit indicates a function supported by the connected port.

In the section of operand [17], a connected plug ID is indicated. This connected plug ID indicates a connected unit plug.

In the section of operand [18], data [ex] specifying an exclusive connection and a connection count are indicated. In a connection where a bit corresponding to the data [ex] for specifying the exclusive connection is set to 1 for example, a producer or consumer does not receive AV/C command of asynchronous connection issued by some one other than a controller which stretches the connection. The connection count indicates the number of stretched connection forming an object of a command (the number of overlay). An undefined section exists in a part of the section of operand [18].

In the section of operand [19], write interval and retry count are indicated. The write interval indicates an interval between issues of write request issued by a producer when he sends segment. The retry counter indicates maximum retry number of writing request issued when the producer sends segment.

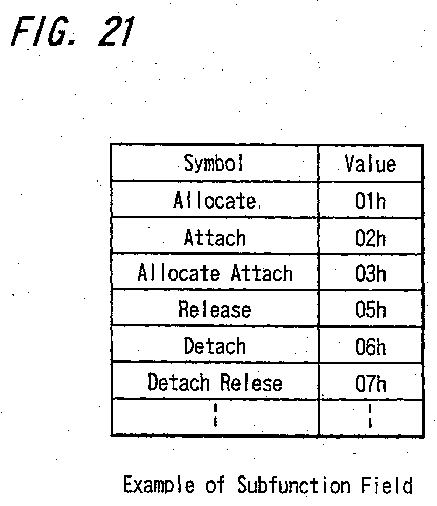

Details of the subfunction indicated in operand [0] will now be described. For example, data shown in FIG. 21 is arranged. Specifically, subfunctions such as allocate, attach, allocate attach, release, detach, and detach release are defined.

Each subfunction will be described. The allocate is a command to be sent to a consumer, by which a plug and a port of the consumer used for transmission are temporarily reserved and an offset address of the plug is obtained by its response.

The attach is a command to be sent to the consumer, by which the plug and the port for the consumer used for transmission are secured. Information on the port of the producer to be connected is transmitted to the consumer.

The allocate attach is a command to be sent to the producer, by which a plug and a port for the producer used for the transmission are secured, the offset address of the plug being obtained, and Information on the port of the consumer to be connected being transmitted to the producer.

The release is a command to be sent to the consumer, which disconnects the plug and the port of the specified consumer.

The detach is a command to be sent to the consumer, operations of the plug and the port of the specified consumer.

The detach release is a command to be sent to the producer, which stops operations of the plug and the port of the specified consumer and makes them disconnected.

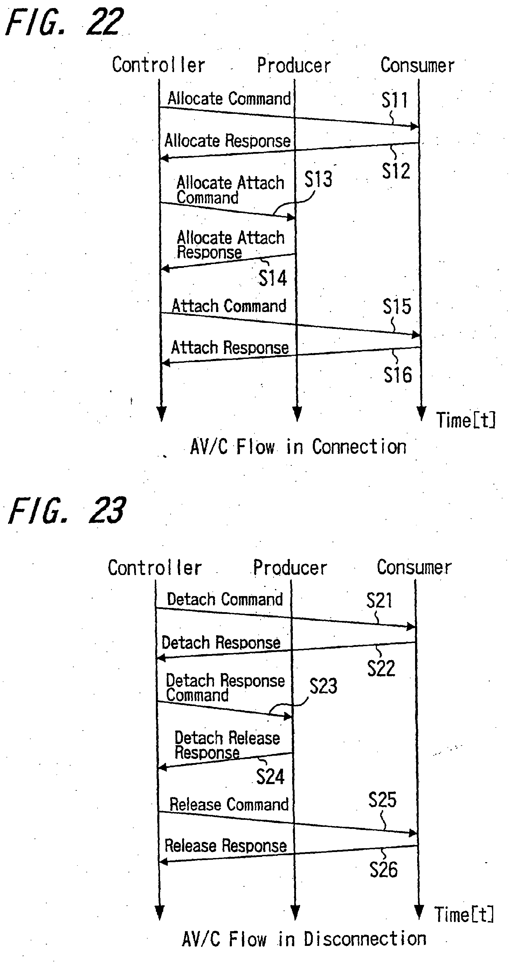

FIGS. 22 and 23 show examples of use of the subfunctions. FIG. 22 shows an example of transmission of command and response necessary for connecting the producer that is a sender of data to the consumer that is a destination of the data under the control of the controller. First, the controller sends the allocate command to the consumer (step S11). When the consumer receives this allocate command, he is reserves the plug and sends the reserved plug information to the controller by response (step S12). If the controller confirms that this allocate command is received by the response, the controller sends the allocate attach command to the producer (step S13). If the producer receives the allocate attach command, the port of the producer is connected and a response is sent to the controller (step S14). If the controller receives the response, the controller sends the attach command to the consumer (step S15). If the consumer receives the attach command, the port of the consumer is connected and the controller receives the attach response (step S16). In this way, the connection between the producer and the consumer is completed.

Disconnection for disconnecting the thus established connection is carried out as shown in FIG. 23. Specifically, the controller sends the detach command to the consumer (step S21). If the consumer receives the detach command, he stops the plug and sends a response (step S22). If the controller confirms that the detach command is received, the controller sends the detach release command to the producer (step S23). If the producer receives the detach release command, the port of the producer is disconnected. If the detach release command is received, a response is sent to the controller (step S24). If the controller receives this response, the controller sends the release command to the consumer (step S25). If the release command is received by the consumer, the port of the consumer is disconnected, and the controller receives the release response (step S26). in this way, the disconnection between the producer and the consumer is completed.

As described above, various control by the AV/C command can be carried out by sending data of the asynchronous connection shown in FIG. 20.

In this embodiment, the digital satellite broadcasting receiver 100 processes to check the function of the audio deck 200 using the specific inquiry command that is a command for inquiring the function of the opposite party by combining the opcode that is an operation code with the operand.

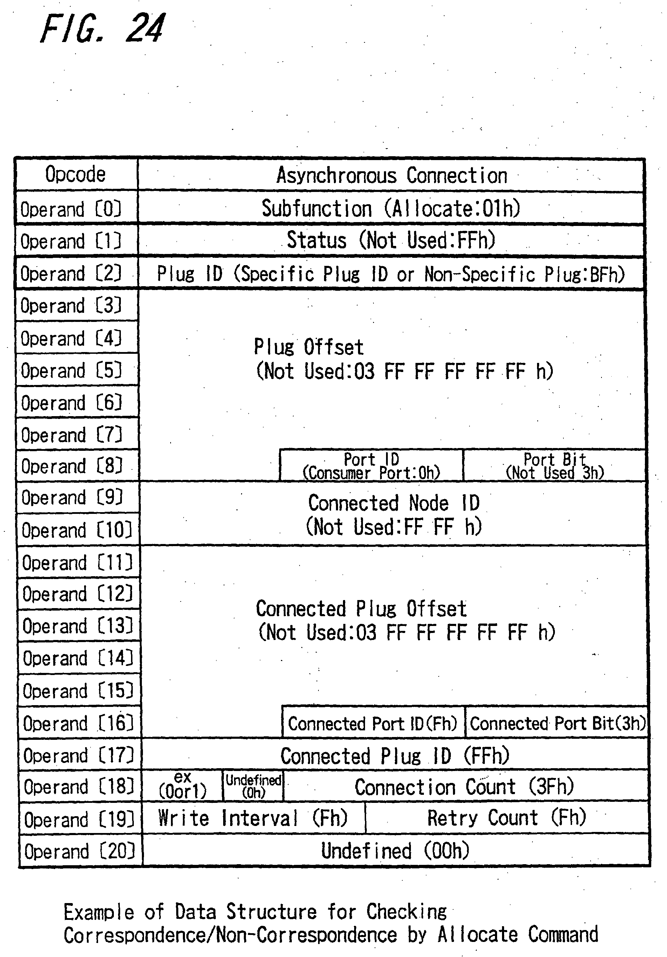

In case of this Specific Inquiry Command, allocate is arranged as subfunction. This will suffice if only the function of the opposite party on the other end is to be inquired, but in the case of the present embodiment, significant data is further disposed in the other field as shown in FIG. 24. In other words, a parameter for sorting the operation code as a unique one is arranged. Specifically, for example, a code indicative of a specific function of the plug included in the device is arranged in the operand [2] indicative of plug ID. In a field that is indicated as "not used" in FIG. 24, data on the maximum value (e.g. FFh) is arranged so as to indicate "not used".

The digital satellite broadcasting receiver 100 sends the command packet shown in FIG. 24 to the bus 1 in the asynchronous transmission mode for transmitting the packet to the audio deck 200. Upon reception of this command packet, the audio deck 200 checks correctly not only the operation code and the operand of subfunction, but also the remaining field. If there is the correspondence, a response packet in which data of [IMPLEMENTED] indicative of correspondence is arranged is generated, and the response packet is transmitted to the digital satellite broadcasting receiver 100 through the bus 1 in the asynchronous transmission mode. If all the fields are checked and it is decided that his own device is not corresponding, a response packet in which data of [NOT IMPLEMENTED] indicative of non- correspondence is arranged is generated, and the response packet is transmitted to the digital satellite broadcast receiver 100 through the bus 1 in the asynchronous transmission mode. Specifically, the operand [2] indicative of the plug ID is also checked in addition to the section of the opcode and the operand [0] of subfunction shown in FIG. 24 in order to decide whether they coincide with the setting of his own device, thereby determining correspondence or non-correspondence, and the IMPLEMENTED data or NOT IMPLEMENTED data is generated.

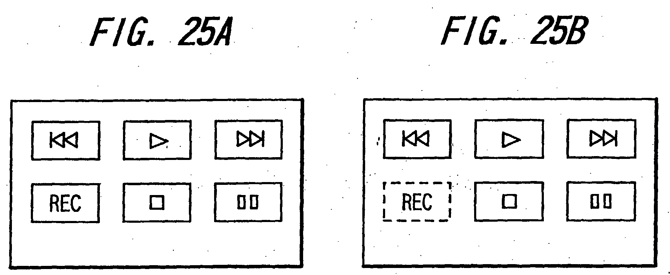

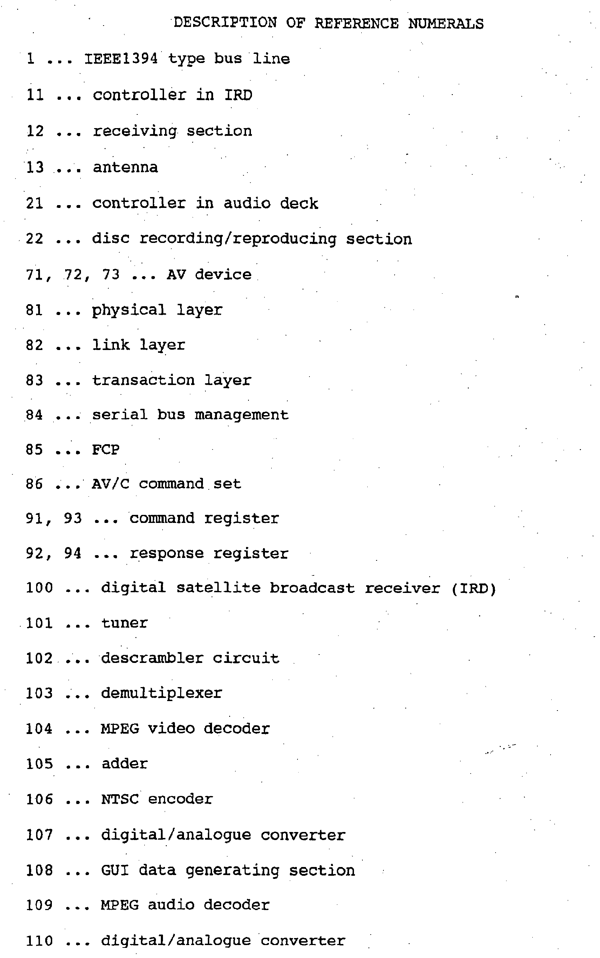

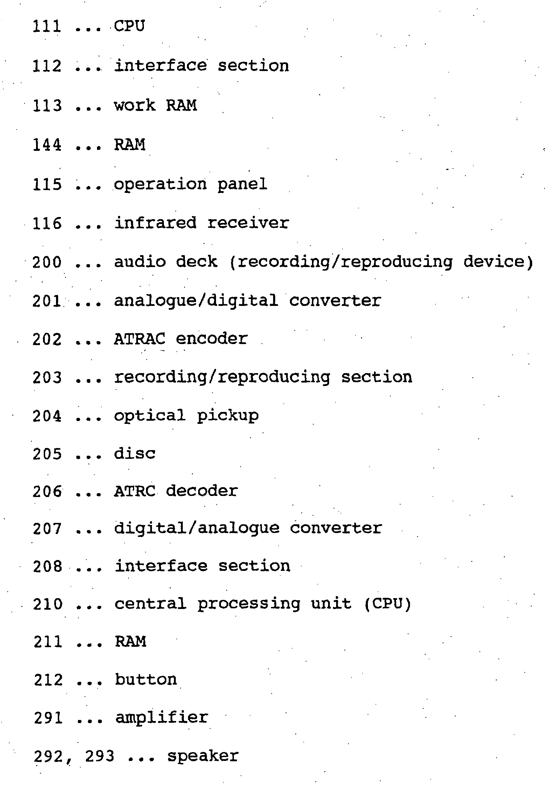

An example of processing when the digital satellite broadcasting receiver 100 thus inquires the function of the audio deck 200 will be described. For example, it is assumed that the audio deck 200 is checked to have a recording function of data inputtd from the bus 1 according to the above-mentioned processing. If the digital satellite broadcast receiver 100 receives a response packet, as an answer thereto, in which the [IMPLEMENTED] data indicative of being corresponding is arranged, a recording button indicating [REC] is displayed together with other operation buttons as shown in FIG. 25A, when the operation screen of the audio deck is displayed on a screen of the image receiver connected to this receiver. If the recording button in the display is selected by operating 100 the cursor key, etc., a command for executing the recording is sent to the audio deck 200 from the digital satellite broadcasting receiver 100.

If the digital satellite broadcast receiver 10 receives a response packet in which [NOT IMPLEMENTED] data indicative of being not corresponding is arranged, when the operating screen of the audio deck is displayed on a screen of this image receiver connected to the receiver 100, it is displayed that the recording button denoted by [REC] is ineffective (this button is shown by broken line in the figure) as shown in FIG. 25B, to indicate that its recording function is invalid. Therefore, in this case, a command for executing the recording is not sent to the audio deck 200 from the digital satellite broadcasting receiver 100. Although the recording button is herein shown by the broken line, the recording button may be displayed in a color different from other effective buttons (e.g., pale color such as gray) or only the other effective buttons may be displayed without displaying the recording button itself.

in this manner, when the inquiry about correspondence/ non-correspondence of the command is transmitted or received by the Specific Inquiry Command, not only the operation code and the operand of subfunction of the desired command but also data including the parameter that enables a command to be uniquely identified are transmitted, and the receiving side checks the function by a range of data including the parameter, which makes it possible to reliably confirm whether or not the device corresponds with the desired command. Therefore, it is possible to prepare a control pulse by a command with which the desired device can dynamically cope using a controller, etc. connected to the bus, and to send a command in a command version with which the desired device can cope.

Although the inquiry was made about the recording function in the above-described example, an inquiry may be made about details of the recording function. In other words, an inquiry may be made about whether or not it corresponds with high speed dubbing recording such as four-fold speed recording to obtain its result.

Although the processing for connecting the digital satellite broadcast receiver and the audio deck through the bus to check the function of the deck from the receiving device has been described in the above embodiment, it is of course possible to apply the present invention to a case where a function of other various devices from a device having a control function connected to the bus.

Although, the network constituted by the IEEE1394 type bus has been described in the above embodiment, the present invention can be applied to a case where a command is sent through a network having another structure to control. In this case, it can also be applied to a case where similar data is transmitted by wireless to constitute a network other than a network connected through a wired bus line.

## Claims

1. A communication method for carrying out communication between a plurality of devices connected with each other through a predetermined digital communication control bus, wherein
in order to check whether a second device connected to a first device through the digital communication control bus corresponds with a desired control command, a parameter for sorting the control command as a unique one is added to an operation code of the control command sent from the first device.

2. A communication method according to claim 1, wherein when the second device that receives the control command decides whether the device corresponds with the desired control command, the second device identifies not only by the operation code of the command but also by a parameter for sorting the command as a unique one, and the second device sends to the first device a response answering the inquiry about whether the device is compatible corresponds or not.

3. A communication method according to claim 2, wherein when it is decided whether the device corresponds with the desired control command based on the response received by the first device, display data of a control panel for instructing the second device to operate is generated based on the decision.

4. A communication method according to claim 3, wherein the display data of the control panel is made to be such data that display of the corresponding control command and display of non-corresponding control command can be distinguished from each other.

5. A communication device capable of carrying out communications with an opposite party on the other end of connection connected with a predetermined digital communication control bus, comprising
communication means for transmitting and receiving packets through the digital communication control bus, and
control means, in order to check whether the opposite party in communication with the electronic device by means of the communication means corresponds with a desired control command, for adding a parameter for sorting the command as being unique to an operation code of the control command and making the communication means send the same resulting signal.

6. A communication device according to claim 5, further comprising display data generating means in which, when the communication means receives a response to the control command, the control means decides whether the device corresponds or not, and based on the decision, the display data generating means generates display data for a control panel that instructs a device sending the response what to operate.

7. A communication device according to claim 6, the display data for the control panel generated by the display data generating means is made to be such data that display of the corresponding control command and display corresponding to non-corresponding control command can be distinguished from each other.

8. A communication device capable of carrying out communications with an opposite party on the other end of connection connected with a predetermined digital communication control bus, comprising
communication means for transmitting and receiving packets through the digital communication control bus, and
control means for identifying whether the device corresponds with a predetermined control command not only by designation of a predetermined operation code included in a packet received from the predetermined opposite party by means of the communication means but also by a parameter for sorting the command as being unique, and making the communication means transmit a packet of response including its response data.

9. A communication system for carrying out communication between first and second devices connected with each other through a predetermined digital communication control bus, wherein
the first device comprises:
first communication means for transmitting and receiving packets through the digital communication control bus; and
first control means for adding a parameter for sorting a desired control command as a unique one to an operation code of the control command in order to check whether the second device corresponds with the desired control command, and making the first communication means transmit the resulting signal;
the second device comprises:
second communication means for transmitting and receiving packets through the digital communication control bus; and
second control means for identifying whether the device corresponds with a predetermined control command not only by designation of a predetermined operation code included in packets received from the first device by the second communication means but also by a parameter for sorting the command as a unique one, and making the second communication means send a packet of response including response data to the first device.

10. A communication system according to claim 9, wherein the first device includes display data generating means, and when it is decided whether the device corresponds with the desired control command based on the response received by the first device, the display data generating means generates display data of a control panel for instructing the second device what to operate based on the decision.

11. A communication system according to claim 10, wherein the display data generated by the display data generating means of the first device is made to be such data that display for the corresponding control command and display for non-corresponding control command can be distinguished from each other.
